# EUROPÄISCHE PATENTANMELDUNG

(11) **EP 1 923 946 A1**
(43) Veröffentlichungstag der Anmeldung: **21.05.2008**
(21) Anmeldenummer: 07033521.1
(22) Anmeldetag: 17.10.2007
(51) Int. Cl.: H01M 8/04, H01M 8/06

(54) **Verwendung einer Brennervorrichtung in einem Brennstoffzellensystem**

(30) Priorität: 17.10.2006 DE 102006048984
(71) Anmelder: Webasto AG, 82131 Stockdorf (DE)
(72) Erfinder: Boltze, Matthias, 17039 Wulkenzin (OT Neuendorf) (DE); Rozumek, Michael, 17033 Neubrandenburg (DE); Käding, Stefan, 17309 Zerrenthin (DE); Pfalzgraf, Manfred, 82211 Herrsching am Ammersee (DE); Engl, Andreas, 80689 München (DE); Bleeker, Beate, 81375 München (DE); Süßl, Michael, 81477 München (DE); Bedenbecker, Markus, 82131 Gauting (DE); Baade, Jens, 17033 Neubrandenburg (DE); Lawrence, Jeremy, 01277 Dresden (DE); Günther, Norbert, 18311 Ribnitz (DE)
(74) Vertreter: Schumacher & Willsau

(57) **Zusammenfassung**

Die Erfindung betrifft eine Brennervorrichtung (10) mit einem Brennraum (26), einer Brennstoffzuleitung (16), einer Verbrennungsluftzuleitung (18) sowie mit einer dem Brennraum (26) nachgelagerten Abgasabführung (38), wobei aus zugeführtem Brennstoff und zugeführter Verbrennungsluft ein Verbrennungsgemisch erzeugt wird und wobei dem Brennraum (26) eine Mischungszone (20) vorgelagert ist, der über eine Brenngaszuleitung (22, 24) Brenngas zuführbar ist und in der das Brenngas mit der Verbrennungsluft und/oder dem Verbrennungsgemisch mischbar ist, als Nachbrenner in einem Brennstoffzellensystem, wobei der Mischungszone (20) über die Brenngaszuleitung (22, 24) Anodenabgas einer Brennstoffzelle oder eines Brennstoffzellenstapels (42) zuführbar ist.

Erfindungsgemäß ist vorgesehen dass die Brennervorrichtung (10) während einer Startphase des Brennstoffzellensystems als Startbrenner arbeitet, indem das der Brennervorrichtung zugeführte Verbrennungsgemisch auch in Abwesenheit einer Zuführung von Anodenabgas verbrannt wird.

## Beschreibung

Die Erfindung bezieht sich auf eine Brennervorrichtung mit einem Brennraum, einer Brennstoffzuleitung, einer Verbrennungsluftzuleitung sowie mit einer dem Brennraum nachgelagerten Abgasabführung, wobei aus zugeführtem Brennstoff und zugeführter Verbrennungsluft ein Verbrennungsgemisch erzeugt wird und wobei dem Brennraum eine Mischungszone vorgelagert ist, der über eine Brenngaszuleitung Brenngas zuführbar ist und in der das Brenngas mit der Verbrennungsluft und/oder dem Verbrennungsgemisch mischbar ist, als Nachbrenner in einem Brennstoffzellensystem, wobei der Mischungszone über die Brenngaszuleitung Anodenabgas einer Brennstoffzelle oder eines Brennstoffzellenstapels zuführbar ist.

In der DE 10 2004 049 903 A1 wird bereits vorgeschlagen, einen Verdampfungsbrenner mit zusätzlicher Gaszuführung als Nachbrenner eines Brennstoffzellensystems einzusetzen. Hierdurch soll sichergestellt werden, dass die Verbrennung des aus einem Brennstoffzellenstapel austretenden Anodenabgases unabhängig von der aktuellen Abgasqualität zuverlässig stattfindet, nämlich durch die kontinuierliche Zuführung von Flüssigbrennstoff und Verbrennungsluft zur Verdampfereinheit der Brennervorrichtung.

Bei der Inbetriebnahme eines Brennstoffzellensystems ist es erforderlich, dieses zunächst aufzuheizen. Zu diesem Zweck wird der Reformer des Brennstoffzellensystems zunächst wie ein Brenner betrieben, das heißt mit einer entsprechenden, das Brennstoff-Luft-Verhältnis kennzeichnenden Luftzahl. Durch die überstöchiometrische Betriebsweise des Reformers findet eine vollständige Verbrennung des zugeführten Brennstoffs statt, und es kommt somit nicht zu unerwünschten Emissionen von CO und H₂. Sind der Reformer und/oder sonstige Komponenten des Systems hinreichend aufgeheizt, wird der Reformer vom Brennbetrieb in den Reformierungsbetrieb umgeschaltet. Dies hat zur Folge, dass sich die Zusammensetzung des vom Reformer abgegebenen Gases schlagartig ändert. Das nun abgegebene Gas ist brennbar und giftig; es enthält insbesondere erhebliche Mengen an H₂ und CO. Im Hinblick auf die von dem Reformer abgegebenen Gase ist es erforderlich, einen Nachbrenner zu betreiben, der das CO- und H₂-haltige Gas verbrennt. Bis der Nachbrenner allerdings eine Temperatur erreicht hat, die eine vollständige Oxidation der ihm zugeführten Gase erlaubt, vergeht Zeit, in der es noch zu unerwünschten CO- und H₂-Emissionen kommen kann. Noch problematischer ist der Fall, wenn der Nachbrenner aus irgendwelchen Gründen nicht startet, beispielsweise aufgrund des Ausfalls von Zündern. Das giftige und brennbare Gas würde in diesem Fall bis zur Detektion der Fehlfunktion aus dem System austreten.

Es ist die Aufgabe der vorliegenden Erfindung, eine gattungsgemäße Verwendung einer Brennervorrichtung in einem Brennstoffzellensystem derart weiterzubilden, so dass kritische Emissionswerte vermieden werden und ein zuverlässiges Starten des Nachbrenners erfolgt.

Diese Aufgabe wird durch die Merkmale des Anspruchs 1 gelöst.

Vorteilhafte Ausgestaltungen und Weiterbildungen ergeben sich aus den abhängigen Ansprüchen.

Die oben erwähnte gattungsgemäße Verwendung einer Brennervorrichtung ist erfindungsgemäß dadurch weitergebildet, dass die Brennervorrichtung während einer Startphase des Brennstoffzellensystems als Startbrenner arbeitet, indem das der Brennervorrichtung zugeführte Verbrennungsgemisch auch in Abwesenheit einer Zuführung von Anodenabgas verbrannt wird. Durch den Betrieb der Brennervorrichtung während der Startphase des Brennstoffzellensystems wird der Nachbrenner aufgeheizt und somit auf seinen Betrieb während der Reformierungsphase vorbereitet. Sobald der Reformer von der Brennerbetriebsart auf die Reformierungsbetriebsart umschaltet, steht der Nachbrenner zur vollständigen Oxidation des ihm zugeführten Reformats zur Verfügung. Folglich kommt es auch zwischenzeitlich nicht zu unerwünschten Emissionen, wie etwa von CO und H₂.

Nützlicherweise ist vorgesehen, dass eine Startsequenz der Brennervorrichtung wie folgt abläuft:
- Betreiben der Brennervorrichtung als Startbrenner unter Zuführung von Verbrennungsluft über die Verbrennungsluftzuleitung und Brennstoff über die Brennstoffzuleitung in Abwesenheit einer Zuführung von Anodenabgas,
- Starten des Reformerbetriebs mit einem Brennstoff-Luft-Verhältnis, das für eine Verbrennung charakteristisch ist,
- Überführen des Reformerbetriebs in eine Betriebsphase mit einem Brennstoff-Luft-Verhältnis, das für eine Reformierung charakteristisch ist, und
- Beenden der Zuführung von Brennstoff über die Brennstoffzuleitung.

Insbesondere kann also die Zuführung von Brennstoff nach der zuverlässigen Inbetriebnahme des Nachbrenners gestoppt werden. Dem Nachbrenner wird dann nur noch Verbrennungsluft und das über die Brenngaszuleitung zugeführte Gas, das heißt Reformat oder im Brennstoffzellenstapel abgereichertes Reformat, zugeleitet.

Gemäß einer bevorzugten Ausführungsform ist vorgesehen, dass der über die Brennstoffzuleitung zugeführte Brennstoff Flüssigbrennstoff ist. Insbesondere im Kraftfahrzeugbereich, wo hauptsächlich flüssige Brennstoffe verwendet werden, ist es nützlich, dem Reformer und dem Startbrenner die zur Verfügung stehenden flüssigen Brennstoffe zuzuführen, das heißt im Allgemeinen Benzin oder Diesel. Dabei können identische oder unterschiedliche Brennstoffe für die Reformierung beziehungsweise den Betrieb des Startbrenners zum Einsatz kommen.

Ebenso ist denkbar, dass der über die Brennstoffzuleitung zugeführte Brennstoff Brenngas ist. Der kombinierte Start- und Nachbrenner muss nur im Hinblick auf seinen Startbrennteil modifiziert werden, um die Verbrennung von entweder flüssig oder gasförmig zugeführter Brennstoffe während der Startphase zu gestatten. Dies ist insbesondere für den häuslichen Bereich interessant, wo vielfach Erdgas zum Einsatz kommt, zunehmend aber auch für mobile Anwendungen, da hier der Einsatz von in gasförmiger Form zugeführten Brennstoffen an Bedeutung gewinnt.

Bei der im Rahmen der Erfindung zum Einsatz kommenden Brennervorrichtung handelt es sich insbesondere um eine Brennervorrichtung mit einem wenigstens teilweise von einem Porenkörper ausgefüllten Brennraum, mit einer dem Brennraum vorgelagerten Verdampfungszone zur Verdampfung von über eine Brennstoffzuleitung zugeführtem Flüssigbrennstoff mit einer Zündeinrichtung zur Zündung eines Verbrennungsgemisches aus verdampftem Flüssigbrennstoff und über eine Verbrennungsluftzuleitung der Verdampfungszone zugeführten Verbrennungsluft sowie mit einer dem Brennraum nachgelagerten Abgasabführung, wobei zwischen der Verdampfungszone und dem Brennraum eine Mischungszone angeordnet ist, in der über eine Brenngaszuleitung der Mischungszone zugeführtes Brenngas mit der Verbrennungsluft und/oder dem Verbrennungsgemisch mischbar ist. Dem liegt die Idee zugrunde, in einer ersten Zone, nämlich der Verdampfungszone aus dem Flüssigbrennstoff und der Verbrennungsluft ein vorzugsweise zündfähiges Verbrennungsgemisch zu erzeugen, welches, je nach Bedarf, in einer sich anschließenden Mischzone weiter mit Brenngas angereichert wird. Das so angereicherte Verbrennungsgemisch wird dann gezündet und bildet im Porenkörper eine definierte und stabilisierte Flamme aus. Man beachte, dass der Begriff "Verbrennungsluft" im Rahmen dieser Beschreibung weit zu verstehen ist und nicht nur atmosphärisches Luftgemisch, sondern jede andere Art sauerstoffhaltigen Gases, das durch Mischung mit verdampften Flüssigbrennstoff oder mit Brenngas ein zündfähiges Gemisch bilden kann, umfasst. Typisch für den Porenbrenner ist sein Porenkörper, das heißt ein Körper aus porösem Material, der den Brennraum wenigstens teilweise ausfüllt. Als poröses Material für einen solchen Porenkörper kommen vor allem nichtoxidische Materialien wie SiC, SiN oder auch hochschmelzende Oxide wie beispielsweise Al₂O₃ oder ZrO₂ in Frage. Porenkörper werden häufig eingesetzt, um die Abgasqualität einer Brennervorrichtung zu verbessern. Da es in dem Porenkörper zu einer definierten Verbrennung an einer großen Oberfläche kommt, erzielt man durch Einsatz eines Porenkörpers eine stabilisierte, vollständige Verbrennung, so dass der Brenner bei niedrigeren Temperaturen arbeiten kann, was wiederum die NOₓ-Konzentration im Abgas reduziert. Zugleich werden Bereiche des Porenkörpers, wie etwa in der vorgenannten Druckschrift offenbart, als Flammsperre verwendet, um ein Zurückschlagen der Flamme auf Zuleitungen oder die Verdampfungszone zu verhindern. Dies kann beispielsweise dadurch erreicht werden, dass in demjenigen Bereich des Porenkörpers, der der Zuleitung bzw. der Verdampfungszone zugewandt ist, eine sehr kleine Porengröße vorgesehen ist, so dass sich dort keine Flamme ausbilden kann. Angrenzend an diese kleinporige Zone sind in dem Porenkörper größere Poren vorgesehen, die eine stabile Flammenbildung zulassen. Hierdurch werden die Ziele der stabilisierten Flammbildung und der Rückschlagsperre erreicht.

Vorzugsweise ist die Verdampfungszone wenigstens teilweise von einem porösen Verdampferelement ausgefüllt.

Als besonders vorteilhaft wird dabei die Verwendung eines metallischen Vlieses als poröses Verdampferelement angesehen. Allerdings ist es auch möglich, hierfür keramische Vliese oder poröse Festkörper zu verwenden. Durch die große Oberfläche des porösen Verdampferelementes wird die Verdampfung des Flüssigbrennstoffes unterstützt. Eine weitere Unterstützung kann die Verdampfung durch Vorheizung des Verdampferelementes oder dessen katalytische Beschichtung sein. Zwar ist es auch möglich, die Verdampferzone als Zerstäubungskammer auszubilden; aufgrund der einfacheren technischen Umsetzung wird jedoch die Verwendung eines Verdampferelementes bevorzugt. Grundsätzlich ist es jedoch ebenfalls möglich, den flüssigen Brennstoff über eine Düse zuzuführen, also ohne Vlies.

Bei einer günstigen Weiterbildung der Erfindung ist vorgesehen, dass die Brenngaszuleitung in der Mischzone als, vorzugsweise stirnseitig, abgeschlossenes Rohr mit radialen Öffnungen in seiner Rohrwand ausgebildet ist. Ein solches Rohr wird von dem aus der Verdampfungszone in die Mischzone strömenden Verbrennungsgemisch umspült, so dass eine besonders gute Vermischung des Brenngases und des Verbrennungsgemisches zu dessen Anreicherung erzielt wird.

Alternativ kann die Brenngaszuleitung in der Mischzone auch als poröser Keramikkörper ausgebildet sein. Aufgrund der größeren Oberfläche eines solchen Keramikkörpers gegenüber einem Rohr mit durchbrochener Rohrwand kann die Vermischung von Brenngas und Verbrennungsgemisch hier noch besser erfolgen.

Die Zündeinrichtung zur Zündung des ggf. angereicherten Verbrennungsgemisches befindet sich vorzugsweise in der Brennkammer und ragt besonders bevorzugt in den Porenkörper hinein. Auf diese Weise wird sichergestellt, dass erst in den Porenkörper eingedrungene (angereichertes) Verbrennungsgemisch gezündet wird, so dass sich eine Flamme erst im Porenkörper ausbildet und ein Rückschlag auch ohne spezielle Flammsperre verhindert wird.

Wird der erfindungsgemäße Brenner, wie zuvor beschrieben, im Kombinationsbetrieb genutzt, kann die Flamme der Flüssigbrennstoffverbrennung als Pilotflamme für die Brenngasverbrennung dienen. Auf diese Weise können auch Brenngase verbrannt werden, die in einem reinen Gasbrenner nicht brennbar wären. Mit qualitativ hochwertigen Brenngasen bzw.

Flüssigbrennstoffen ist der erfindungsgemäße Brenner jedoch auch im Reinbetrieb, das heißt als Gas- oder Flüssigbrennstoffbrenner einsetzbar.

Vorteilhafterweise ist eine Steuereinrichtung vorgesehen, die die Zuleitung von Brenngas, Flüssigbrennstoff und Verbrennungsluft in Abstimmung aufeinander steuert. Eine solche Steuereinrichtung ermöglicht es unter unterschiedlichen Versorgungs- oder Qualitätsbedingungen stets eine optimierte Verbrennung zu erzielen.

Da es sehr aufwendig wäre, die einzelnen Komponenten der Verbrennung vorab auf ihre chemischen Eigenschaften zu prüfen und die Steuerparameter entsprechend einzustellen, wird die Abstimmung bei einer vorteilhaften Weiterbildung der Erfindung geregelt. Das heißt es ist vorgesehen, die Abstimmung in Abhängigkeit von einem mittels eines Sensors im Bereich der Abgasabführung und/oder im Brennraum erfassten Parameters zu steuern. Hierzu kann beispielsweise eine sogenannte λ-Sonde im Bereich der Abgasführung und/oder ein Temperaturfühler im gleichen Bereich oder im Bereich des Brennraumes dienen. Auf diese Weise kann die Verbrennung selbst überwacht und bei Abweichung gemessener Parameter von vorgegebenen Sollwerten kann die Abstimmung der einzelnen Verbrennungskomponenten aufeinander verändert werden, um zu einer optimalen Verbrennung zu gelangen. Eine solche ergebnisorientierte Regelung ist insbesondere günstig, wenn davon auszugehen ist, dass verfügbare Mengen und/oder Qualitäten einzelner Verbrennungskomponenten stark schwanken. Dies ist in Brennstoffzellensystemen der Fall.

Zur effizienten Nutzung der bei der Verbrennung entstehenden Wärme ist vorzugsweise vorgesehen, dass der Brennraum mit einem Wärmetauscherelement in thermischem Kontakt steht.

Ein bevorzugtes Ausführungsbeispiel der Erfindung wird nachfolgend anhand der Zeichnung beispielhaft erläutert.

Es zeigen:
- Figur 1: eine schematische Darstellung einer Brennstoffzellenanordnung mit einer Brennervorrichtung in Querschnittsansicht;
- Figur 2: ein Brennstoffzellensystem zur weiteren Erläuterung der Erfindung und
- Figur 3: ein Flussdiagramm zur Erläuterung eines im Zusammenhang mit der erfindungsgemäßen Verfahren zum Einsatz kommenden Verfahrens.

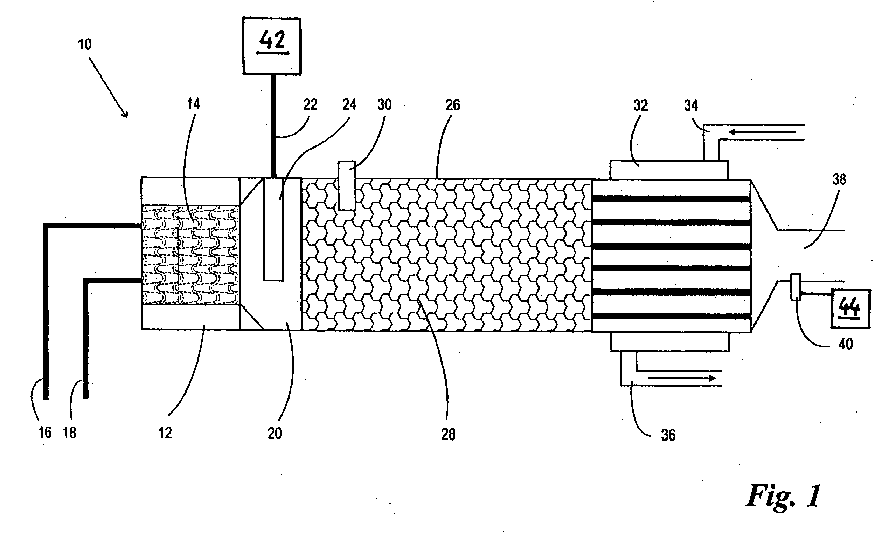

Figur 1 zeigt eine schematische Querschnittsansicht einer ein Brennstoffzellenmodul 42 aufweisenden Brennstoffzellenanordnung, der eine Brennervorrichtung 10 zugeordnet ist. In eine Verdampfungszone 12, die vorzugsweise als metallisches Verdampfungselement 14, insbesondere als metallisches Vlies ausgebildet ist, wird über eine Brennstoffzuleitung 16 Flüssigbrennstoff und über eine Verbrennungsluftzuleitung 18 Verbrennungsluft zugeführt. An der Oberfläche des Verdampferelementes 14, das katalytisch beschichtet sein kann, verdampft der zugeführte Flüssigbrennstoff und wird mit der Verbrennungsluft gemischt.

Von der Verdampfungszone strömt das entstandene Verbrennungsgemisch in eine Mischungszone 20. In die Mischungszone 20 wird über eine Brenngaszuleitung 22 Brenngas eingeleitet, im dargestellten Fall Anodenabgas des Brennstoffzellenmoduls 42. Die Brenngaszuleitung 22 hat in der Mischungszone 20 vorzugsweise die Form eines perforierten Rohres oder eines porösen Körpers, insbesondere eines porösen Keramikkörpers. Dieser Endbereich der Brenngaszuleitung 22 wird nachfolgend als Brenngasverteiler 24 bezeichnet. Der Brenngasverteiler 24 wird von dem Verbrennungsgemisch aus der Verdampfungszone umströmt, so dass es zu einer gleichmäßigen Durchmischung von Brenngas und Verbrennungsgemisch, das heißt zu einer Anreicherung des Verbrennungsgemisches kommt. Das (angereicherte) Verbrennungsgemisch strömt dann weiter in den Brennraum 26, der bei der gezeigten Ausführungsform vollständig von einem Porenkörper 28 ausgefüllt ist. In den Porenkörper 28 hinein ragt ein Zünder 30, der beispielsweise als elektrischer Glühstift ausgebildet sein kann. Der Zünder 30 zündet das in den Porenkörper 28 eingedrungene (angereicherte) Verbrennungsgemisch, was zur Ausbildung einer stabilisierten Flamme und zur nahezu vollständigen Verbrennung des Verbrennungsgemisches führt. Im hinteren Bereich des Brennraumes ist ein Wärmetauscher 32 angeordnet, der beispielsweise als schlangenförmiges Rohr mit Anschlüssen für eine Wärmefluidzuleitung 34 und eine Wärmefluidableitung 36 aufweist. Als Wärmefluide kommt insbesondere Luft in Frage, die dann im erwärmten Zustand wieder anderweitig im System genutzt werden kann. Ebenso können sonstige gasförmige oder flüssige Wärmeträger verwendet werden, wie Wasser, Glykol, Thermoöle etc.

An den hinteren Bereich des Brennraumes 26 schließt sich eine Abgasabführung 38 an, durch welche die Abgase der Verbrennung nach außen abgeführt werden.

Bei der dargestellten Ausführungsform ist im Bereich der Abgasabführung eine λ-Sonde 40 vorgesehen, mit deren Hilfe durch Messung bestimmter Abgasparameter die Verbrennungsqualität bestimmt werden kann. Die mittels der λ-Sonde 40 ermittelten Parameter können in eine Steuereinrichtung 44 eingespeist werden, welche die Abstimmung der Verbrennungskomponenten Flüssigbrennstoff, Verbrennungsluft und Brenngas variiert, um die Verbrennung im Brennraum 26 zu optimieren.

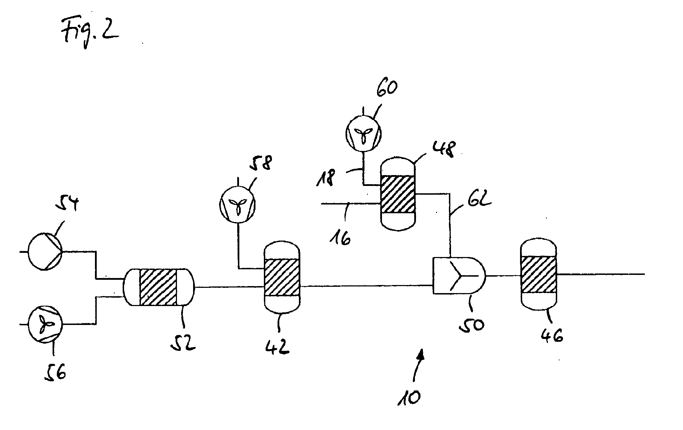

Figur 2 zeigt ein Brennstoffzellensystem zur weiteren Erläuterung der Erfindung. Die als Start- und Nachbrenner arbeitende Brennervorrichtung 10 ist hier schematisch in der Form eines Ersatzschaltbildes dargestellt, nämlich repräsentiert durch einen Nachbrenner 46, einen Startbrenner 48 und einen Mischer 50. Die weiteren Komponenten des dargestellten Systems sind ein Reformer 52 und ein Brennstoffzellenstapel 42. Dem Reformer werden Brennstoff über eine Brennstoffpumpe 54 und Luft über ein Gebläse 56 zugeführt. Die den Reformer 52 verlassenden Gase, das heißt vollständig oxidiertes Abgas während des Brennerbetriebs des Reformers 52 und Reformat während des Reformierungsbetriebs des Reformers 52, werden der Anodenseite des Brennstoffzellenstapels 42 zugeführt. Dem Brennstoffzellenstapel 42 wird auf seiner Kathodenseite über ein Gebläse 58 weiterhin Kathodenzuluft zugeleitet. Das den Brennstoffzellenstapel 42 verlassende Gas, das heißt vollständig oxidiertes Abgas während des Brennerbetriebs des Reformers 52, Reformat während des Reformierungsbetriebs des Reformers 52 und insbesondere abgereichertes Reformat, wenn auch der Brennstoffzellenstapel 42 seinen Betrieb aufgenommen hat, wird dem Mischer 50 zugeführt. Dieser erhält weiterhin Abgase des Startbrenners 48, welcher über die Brennstoffzuleitung 16 mit Brennstoff und über die Verbrennungsluftzuleitung 18 und ein in der Verbrennungsluftzuleitung 18 vorgesehenes Gebläse 60 mit Verbrennungsluft versorgt wird. Die Kopplung des Startbrenners 48 mit dem Mischer 50 kann dabei mehr oder weniger eng sein. Während Figur 2 eine Kopplung lediglich über die Abgasleitung 62 veranschaulicht, kann die Kopplung auch soweit gehen - und dies ist bei dem kombinierten Start- und Nachbrenner gemäß Figur 1 der Fall - dass der Mischer 50 sowohl dem Startbrenner 48 als auch dem Nachbrenner 46 in baulicher Einheit zugeordnet ist und dass sich die beiden Brenner 46, 48 denselben Brennraum teilen.

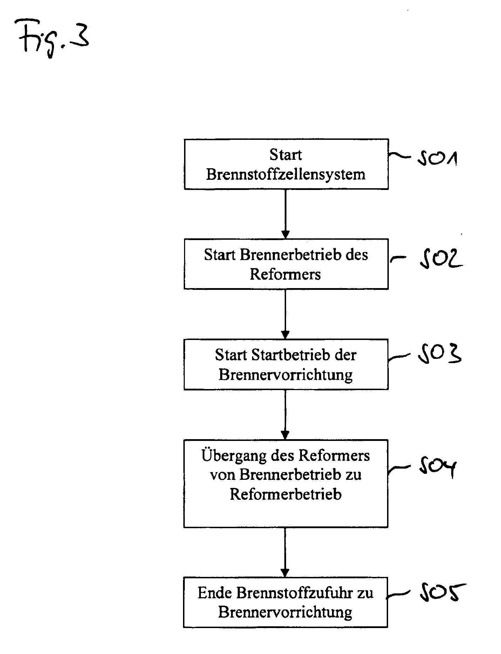

Figur 3 zeigt ein Flussdiagramm zur Erläuterung eines im Zusammenhang mit der erfindungsgemäßen Verfahren zum Einsatz kommenden Verfahrens. Gemäß Schritt S01 wird der Start des Brennstoffzellensystems veranlasst, woraufhin der Reformer gemäß Schritt S02 seinen Brennerbetrieb beginnt. Zeitgleich beginnt die Brennervorrichtung ihren Startbetrieb gemäß Schritt S03, das heißt dem Startbrenner zugeführter Brennstoff wird unter Verwendung der dem Startbrenner zugeführten Verbrennungsluft verbrannt. Folglich heizen sich die Brennervorrichtung und damit der Nachbrenner auf. Die Inbetriebnahme der Brennervorrichtung kann auch vor Inbetriebnahme des Reformers erfolgen. Ebenso ist eine zeitverzögerte Inbetriebnahme möglich. Gemäß Schritt S04 geht der Reformer dann, insbesondere wenn bestimmte Temperaturzustände erreicht sind, in den Reformerbetrieb über. Dann kann gemäß Schritt S05 auch die Brennstoffzufuhr zur Brennervorrichtung eingestellt werden. Dies kann unter Umständen auch bereits vor dem Übergang des Reformers in den Reformierungsbetrieb erfolgen, solange sichergestellt ist, dass der Nachbrenner das ihm zugeführte Reformat verbrennen kann, ohne das hierfür ein Übergangszeitraum erforderlich wäre.

Natürlich stellt das in der speziellen Beschreibung und den Zeichnungen dargestellte Ausführungsbeispiel lediglich eine beispielhafte Ausführungsform der Erfindung dar, die keinesfalls beschränkend gedacht ist. Änderungen und Modifikationen durch den Fachmann sind möglich. Insbesondere können zusätzliche oder andere Sensoren als die gezeigte λ-Sonde 40 verwendet werden. Es kann auch auf jegliche Sensoren verzichtet werden. Weiter ist die spezielle geometrische Anordnung der einzelnen Brennerbereiche nicht notwendig gleich der in Figur 1 beschriebenen. Zur Kühlung von Abgasen oder zur Vorwärmung von Brenngas, Flüssigbrennstoff und/oder Verbrennungsluft kann das Abgas oder Teile davon zur Umspülung der entsprechenden Zuleitungen 16, 18, 22 rückgeführt werden. Auch eine Rückführung in den Wärmetauscher zur Verbesserung von dessen Wirkungsgrad ist möglich.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Brennervorrichtung
- 12: Verdampfungszone
- 14: Verdampfungselement
- 16: Brennstoffzuleitung
- 18: Verbrennungsluftzuleitung
- 20: Mischungszone
- 22: Brenngaszuleitung
- 24: Brenngasverteiler
- 26: Brennraum
- 28: Porenkörper
- 30: Zünder
- 32: Wärmetauscher
- 34: Wärmefluidzuleitung
- 36: Wärmefluidableitung
- 38: Abgasabführung
- 40: λ-Sonde
- 42: Brennstoffzellenstapel
- 44: Steuereinrichtung
- 46: Nachbrenner
- 48: Startbrenner
- 50: Mischer
- 52: Reformer
- 54: Brennstoffpumpe
- 56: Gebläse
- 58: Gebläse
- 60: Gebläse
- 62: Abgasleitung

## Patentansprüche

1. Verwendung einer
- Brennervorrichtung (10) mit einem Brennraum (26), einer Brennstoffzuleitung (16), einer Verbrennungsluftzuleitung (18) sowie mit einer dem Brennraum (26) nachgelagerten Abgasabführung (38), wobei aus zugeführtem Brennstoff und zugeführter Verbrennungsluft ein Verbrennungsgemisch erzeugt wird und wobei dem Brennraum (26) eine Mischungszone (20) vorgelagert ist, der über eine Brenngaszuleitung (22, 24) Brenngas zuführbar ist und in der das Brenngas mit der Verbrennungsluft und/oder dem Verbrennungsgemisch mischbar ist,
- als Nachbrenner in einem Brennstoffzellensystem, wobei der Mischungszone (20) über die Brenngaszuleitung (22, 24) Anodenabgas einer Brennstoffzelle oder eines Brennstoffzellenstapels (42) zuführbar ist,
**dadurch gekennzeichnet, dass** die Brennervorrichtung (10) während einer Startphase des Brennstoffzellensystems als Startbrenner arbeitet, indem das der Brennervorrichtung zugeführte Verbrennungsgemisch auch in Abwesenheit einer Zuführung von Anodenabgas verbrannt wird.

2. Verwendung nach Anspruch 1, **dadurch gekennzeichnet, dass** eine Startsequenz der Brennervorrichtung (10) wie folgt abläuft:
- Betreiben der Brennervorrichtung (10) als Startbrenner unter Zuführung von Verbrennungsluft über die Verbrennungsluftzuleitung (18) und Brennstoff über die Brennstoffzuleitung (16) in Abwesenheit einer Zuführung von Anodenabgas,
- Starten des Reformerbetriebs mit einem Brennstoff-Luft-Verhältnis, das für eine Verbrennung charakteristisch ist,
- Überführen des Reformerbetriebs in eine Betriebsphase mit einem Brennstoff-Luft-Verhältnis, das für eine Reformierung charakteristisch ist, und
- Beenden der Zuführung von Brennstoff über die Brennstoffzuleitung (18).

3. Verwendung nach Anspruch 1 oder 2, **dadurch gekennzeichnet, dass** der über die Brennstoffzuleitung (18) zugeführte Brennstoff Flüssigbrennstoff ist.

4. Verwendung nach Anspruch 1 oder 2, **dadurch gekennzeichnet, dass** der über die Brennstoffzuleitung (18) zugeführte Brennstoff Brenngas ist.
